# EUROPÄISCHE PATENTSCHRIFT

(11) **EP 4 200 114 B1**
(45) Veröffentlichungstag und Bekanntmachung des Hinweises auf die Patenterteilung: **03.12.2025**
(21) Anmeldenummer: 20792941.5
(22) Anmeldetag: 09.10.2020
(51) Int. Cl.: B29C 43/14, B29C 35/02, B29C 43/34, B29C 43/52, B29L 31/34, B29K 101/10, B29K 105/16, B29K 507/04, B29C 31/00

(54) **MEHRSTUFIGES PRESSVERFAHREN ZUM HERSTELLEN EINES FORMTEILS WIE EINER BIPOLARPLATTE AUS EINEM HOCHGEFÜLLTEN DUROMEREN WERKSTOFF**
MULTISTAGE PRESSING PROCESS FOR PRODUCING A MOULDED PART SUCH AS A BIPOLAR PLATE FROM A HIGHLY FILLED THERMOSETTING MATERIAL
PROCÉDÉ DE MOULAGE À PLUSIEURS ÉTAPES POUR PRODUIRE UNE PIÈCE MOULÉE ET UNE PLAQUE BIPOLAIRE À PARTIR D'UN MATÉRIAU THERMODURCISSABLE À TAUX DE CHARGE ÉLEVÉ

(30) Priorität: 21.08.2020 DE 102020121997
(43) Veröffentlichungstag der Anmeldung: 28.06.2023
(73) Patentinhaber: Schunk Kohlenstofftechnik GmbH, 35452 Heuchelheim (DE)
(72) Erfinder: RINN, Günter, 35633 Lahnau (DE); VOORMANN, Hauke, 35440 Linden (DE); BAUMANN, Sören, 35394 Gießen (DE); ALTUNTAS, Mesut, 60320 Frankfurt (DE)
(74) Vertreter: Qip Patent & Recht Dr. Kuehn & Partner mbB
(86) Internationale Anmeldenummer: PCT/EP2020/078489
(87) Internationale Veröffentlichungsnummer: WO 2022/037799

(56) Entgegenhaltungen:
- DE-A1- 102011 055 107
- DE-A1- 4 420 593
- DE-B4- 102011 055 107
- JP-A- 2004 022 207
- KR-A- 20050 052 469

## Beschreibung

### GEBIET DER ERFINDUNG

Die vorliegende Erfindung betrifft ein Verfahren zum Herstellen eines Formteils aus einem hochgefüllten duromeren Ausgangsmaterial. Beispielsweise kann das Verfahren zum Herstellen graphitgefüllter Bipolarplatten eingesetzt werden, wie sie unter anderem in Brennstoffzellen genutzt werden können. Ferner betrifft die Erfindung eine entsprechende Pressvorrichtung, die geeignet ist, das Verfahren auszuführen.

### HINTERGRUND DER ERFINDUNG

Formteile aus duromeren Werkstoffen können in typischen Formgebungsverfahren der Kunststofftechnologie hergestellt werden, bei denen das Material in einen schmelzflüssigen Zustand versetzt, in ein beheiztes Werkzeug eingebracht und dann unter Druck und Temperatur ausgehärtet wird.

Wenn die Formmassen aufgrund eines hohen Füllgrads nur noch eine geringe Fließfähigkeit aufweisen, können gängige Formgebungsverfahren wie etwa Spritzgießen, Spritzpressen oder Spritzprägen unter Umständen nicht mehr eingesetzt werden. Dies trifft typischerweise für Werkstoffe zu, deren Eigenschaften in hohem Maß durch die Art und den Volumenanteil von Füllstoffen definiert sind, wie beispielsweise Gleitwerkstoffe, Reibbeläge, Schleifscheiben oder polymergebundene Werkstoffe mit guter elektrischer Leitfähigkeit.

Für diese Anwendungen werden meist Gemische aus Füllstoffen, warmhärtenden Polymeren und weiteren Additiven in Pulver- oder Granulatform direkt in beheizte Pressformen dosiert, die Pressformen geschlossen und das Material vorverdichtet, entlüftet, fertig verdichtet und ausgehärtet. Eine spezifische Rezeptur, eine Werkzeugtemperatur und ein Kraft-Weg-Zeit-Profil eines hierbei eingesetzten Pressprogramms definieren nicht nur eine Zykluszeit, sondern in hohem Maß auch die Werkstoffeigenschaften.

Eine spezielle Form hochgefüllter duromerer Werkstoffe kommt bei der Herstellung von Bipolarplatten für Polymermembran-Brennstoffzellen zum Einsatz. Graphitgefüllte Polymere sind aufgrund ihrer Korrosionsbeständigkeit in sauren, feuchtwarmen Bedingungen in diesen Anwendungen metallischen Werkstoffen überlegen. Die erforderliche elektrische Leitfähigkeit wird jedoch nur mit einem sehr hohen Füllgrad von 80 bis 90 Massenprozent erreicht, was nur mit einer präzisen Abstimmung von Rezepturbestandteilen und Pressbedingungen möglich ist.

Typische Rezeptur- und Verfahrensbeschreibungen werden seit über 20 Jahren in wissenschaftlichen Publikationen und der Patentliteratur veröffentlicht. Ein typisches Beispiel ist in EP 3 528 326 A1 beschrieben.

DE 44 20 593 A1 beschreibt einen Reibbelag mit Fasern, Binder, Füller, Reib- und Schmiermittel sowie ein Verfahren zum Herstellen desselben.

### ZUSAMMENFASSUNG DER ERFINDUNG UND VORTEILHAFTER AUSFÜHRUNGSFORMEN

Es kann ein Bedarf an einem Verfahren zum Herstellen eines Formteils aus einem hochgefüllten duromeren Ausgangsmaterial bestehen, das eine wirtschaftliche (Großserien-)Fertigung von Formteilen aus hochgefüllten duromeren Formmassen, insbesondere von graphitischen Bipolarplatten, mit vergleichsweise kurzen Zykluszeiten ermöglicht. Ferner kann ein Bedarf an einer Pressvorrichtung zum Durchführen eines solchen Verfahrens bestehen.

Einem solchen Bedarf kann mit dem Gegenstand der unabhängigen Ansprüche entsprochen werden. Vorteilhafte Ausführungsformen sind in den abhängigen Ansprüchen sowie der nachfolgenden Beschreibung definiert.

Aspekte der Erfindung sind in den unabhängigen Ansprüchen definiert und betreffen insbesondere eine Herstellung eines Formteils in Form einer Bipolarplatte für eine Brennstoffzelle auf Basis eines konkret spezifizierten hochgefüllten Ausgangsstoffes. Ein erster Aspekt der Erfindung betrifft ein Verfahren zum Herstellen eines Formteils aus einem hochgefüllten duromeren Ausgangsmaterial. Das Verfahren umfasst die folgenden Schritte, die vorzugsweise in der angegebenen Reihenfolge ausgeführt werden können: Einbringen des Ausgangsmaterials in ein Vorpresswerkzeug, Herstellen eines Vorpresslings aus dem Ausgangsmaterial, wobei das Ausgangsmaterial mittels des Vorpresswerkzeugs auf eine Vorpresstemperatur gebracht wird und mit einer Vorpresskraft zu dem Vorpressling komprimiert wird, Entnehmen des Vorpresslings aus dem Vorpresswerkzeug und Einbringen des Vorpresslings in ein Fertigpresswerkzeug und Herstellen eines Fertigteils aus dem Vorpressling, wobei der Vorpressling mittels des Fertigpresswerkzeugs auf eine Fertigpresstemperatur gebracht wird und mit einer Fertigpresskraft zu dem Fertigteil komprimiert wird. Dabei ist die Vorpresstemperatur kleiner als die Fertigpresstemperatur und die Fertigpresstemperatur ist mindestens so groß wie die Onset-Temperatur der Aushärtereaktion des Ausgangsmaterials. Genauer gesagt kann die Fertigpresstemperatur mindestens so groß wie die Onset-Temperatur der Aushärtereaktion des Bindemittels im Ausgangsmaterial sein.

Bei dem Ausgangsmaterial kann es sich um ein pulver- und/oder granulatförmiges Vormaterial handeln. Das Ausgangsmaterial kann beispielsweise Graphit oder sonstige überwiegend Kohlenstoff enthaltende Stoffverbindungen als Füllstoff enthalten. Möglich sind jedoch auch Ausgangsmaterialien mit andersartigen Füllstoffen. Unter "hochgefüllt" kann in diesem Zusammenhang beispielsweise ein Füllgrad von mindestens 70 Massenprozent verstanden werden. Insbesondere kann das Ausgangsmaterial einen Füllgrad von mindestens 80 oder sogar mindestens 90 Massenprozent aufweisen. Zusätzlich zum Füllstoff kann das Ausgangsmaterial ein Bindemittelsystem bestehend aus Epoxidharz, z. B. vom Typ epoxidierter Kresol-Novolak, Härter, z. B. Novolak-Phenolharz, und einen Aushärtekatalysator, z. B. aus der Gruppe der Aryl- oder Alkylimidazole sowie ein Formtrennmittel, z. B. Wachs, enthalten.

Eine typische Rezeptur kann beispielsweise ca. 84 % Graphit, 10 % epoxidiertes Kresol-Novolak als Harz, 5 % Novolak-Phenolharz als Härter, 1 % Wachs als Formtrennmittel und 0,1 % 2-Methylimidazol als Aushärtekatalysator umfassen.

Je nach Zusammensetzung kann das Ausgangsmaterial eine bestimmte Onset-Temperatur aufweisen, ab der die chemische Vernetzung des Ausgangsmaterials einsetzt, d. h. eine Aushärtereaktion in Gang gesetzt wird. Die Onset-Temperatur kann insbesondere von einem eventuell im Ausgangsmaterial enthaltenen Aushärtekatalysator abhängig sein. Die Onset-Temperatur kann beispielweise mittels dynamischer Differenzkalorimetrie experimentell ermittelt worden sein.

Unter einem Vorpresswerkzeug bzw. Fertigpresswerkzeug kann im Allgemeinen eine beheizbare, zwei- oder mehrteilige Pressform zum Herstellen eines Formteils unter Einwirkung von Druck und Wärme verstanden werden. Das Vorpresswerkzeug und das Fertigpresswerkzeug können in unterschiedlichen Fertigungsstationen, also örtlich voneinander getrennt angeordnet sein. Auch können sich das Vorpresswerkzeug und das Fertigpresswerkzeug in ihrem Formvolumen und/oder ihrer Werkzeuggeometrie voneinander unterscheiden (siehe unten).

Mittels des Vorpresswerkzeugs kann das Ausgangsmaterial zu einem Vorpressling geformt werden. Die Vorpresstemperatur sollte im Erweichungsbereich des Bindemittels liegen, sodass eine gute Verdichtung des Vorpresslings erzielt wird. Zum Umsetzen des Vorpresslings in das Fertigpresswerkzeug können vorzugsweise vollflächige Vakuumgreifer zum Einsatz kommen, die beispielsweise beheizbar sein können, um ein Auskühlen beim Umsetzen zu vermeiden oder die Temperatur des Vorpresslings weiter zu erhöhen. Je nach Vorpresstemperatur ist es möglich, dass beim Herstellen des Vorpresslings bereits die chemische Vernetzung des Ausgangsmaterials einsetzt. Die Vorpresstemperatur sollte jedoch so gewählt werden, dass die chemische Vernetzung während des Vorpressens zumindest größtenteils verhindert wird und/oder nur stark verlangsamt abläuft. Der Zusammenhalt des Vorpresslings wird dann überwiegend durch physikalische Bindungskräfte bewirkt.

Das Einbringen des Ausgangsmaterials in das Vorpresswerkzeug kann manuell, teil-oder vollautomatisiert erfolgen. Ebenso kann das Entnehmen des Vorpresslings aus dem Vorpresswerkzeug und/oder das Einbringen des Vorpresslings in das Fertigpresswerkzeug manuell, teil- oder vollautomatisiert erfolgen (siehe unten).

Die Vorpressparameter wie etwa die Vorpresstemperatur oder die Vorpresskraft und die Fertigpressparameter wie etwa die Fertigpresstemperatur oder die Fertigpresskraft können zumindest teilweise deutlich voneinander abweichen. Insbesondere sollte die Fertigpresstemperatur deutlich größer als die Vorpresstemperatur sein, um eine möglichst schnelle Aushärtung beim Fertigpressen zu bewirken. Gleichzeitig sollte die Vorpresstemperatur aus den weiter oben genannten Gründen nicht zu groß sein. Ebenso können die Vorpresskraft und die Fertigpresskraft voneinander abweichen. Beispielsweise kann beim Herstellen des Vorpresslings ein anderes Pressprogramm als beim Herstellen des Fertigteils verwendet werden. Die Pressprogramme können sich etwa in ihrem Kraft-Weg-Zeit-Profil voneinander unterscheiden.

Die Formgebung kann beispielsweise durch Pressen bei 185 °C, bei einer Presskraft von 37 MPa und bei einer Haltezeit von 10 s oder weniger erfolgen. Nach dieser Presszeit kann das Fertigteil, etwa eine Platte, verformungsfrei aus dem Werkzeug entnommen werden. Die endgültige Aushärtung kann dann beispielsweise durch Nachtempern bei 150 °C bis 200 °C über einen an die Restreaktivität und die Temperatur angepassten Zeitraum erfolgen. An die Formgebung können sich noch zusätzliche Nachbehandlungsschritte anschließen, etwa zum Entgraten und/oder Öffnen von Durchbrüchen, zur Reduzierung des Kontaktwiderstands und/oder zur Reduzierung des Benetzungswinkels.

Bei der Formgebung duromerer Werkstoffe aus pulver- oder granulatförmigem Vormaterial erfordern die Schritte des Vorwärmens, Vorverdichtens und Entlüftens einen gewissen Zeitbedarf. Gleichzeitig sollten die Zykluszeiten im Sinne einer wirtschaftlichen Fertigung, insbesondere von Großserienbauteilen, möglichst kurz sein.

Die Formgebung bei Temperaturen von beispielsweise 150 °C, oder allgemein bei Temperaturen, die nur wenig über der Onset-Temperatur der Aushärtung liegen, ermöglicht eine gute Entlüftung und Verdichtung. Die erforderliche Presszeit kann dann aber im Bereich mehrerer Minuten liegen.

Wird die Aushärtetemperatur erhöht, kann das Zeitfenster zum Vorwärmen, Vorverdichten und Entlüften entsprechend enger werden. Somit kann das Risiko zunehmen, dass bestimmte Qualitätsanforderungen nicht erfüllt werden. Beispielsweise können sich aufgrund unzureichender Entlüftung Blasen oder Lunker bilden oder es kann aufgrund einer spontan startenden Aushärtereaktion zu einer unzureichenden Verdichtung kommen.

In der bereits weiter oben genannten EP 3 528 326 A1 wird beschrieben, dass Presszeiten von weniger als 10 s nur durch Kombination mehrerer Parameter möglich seien. Dabei wird beschrieben, dass hierzu Graphit einer mittleren Korngröße d50 von 30 µm bis 100 µm und mit einem Rückfederverhalten von 20 % bis 70 % bei trockenem Verpressen des Graphits verwendet werde. Es wird angegeben, dass hier eine höhere Rückfederung zu unzureichend verdichteten Platten, eine niedrigere Rückfederung zu Werkstoffen mit einer geringen Biegefestigkeit führen würde. Ferner wird ein Arylimidazol als Aushärtekatalysator angenommen. Die Verwendung der deutlich reaktiveren Alkylimidazole und insbesondere von 2-Methylimidazol wird in diesem Zusammenhang ausdrücklich ausgeschlossen, da dann eine gleichmäßige Verdichtung angeblich nicht mehr möglich sei.

Ein Ziel der hier vorgestellten Erfindung ist es somit, eine wirtschaftliche (Großserien-)Fertigung von Formteilen aus hochgefüllten duromeren Formmassen, insbesondere von graphitischen Bipolarplatten, mit vergleichsweise kurzen Zykluszeiten zu ermöglichen. Ein weiteres Ziel der hier vorgestellten Erfindung ist es, eine solche Fertigung ohne die vorgenannten Einschränkungen in Bezug auf die Rohstoffauswahl zu ermöglichen.

Diese Ziele werden erfindungsgemäß durch eine Fertigung der Formteile in Mehrfach-Kavitäten erreicht, wie sie im Folgenden näher beschrieben wird.

Ausführungsformen des hierin beschriebenen Verfahrens zur rationellen Herstellung von Formteilen aus hochgefüllten duromeren Werkstoffen, insbesondere beispielsweise von graphitischen Bipolarplatten für Brennstoffzellen, bieten unter anderem den Vorteil, dass die Schritte des Vorwärmens, Vorverdichtens und Entlüftens des Ausgangsmaterials zumindest größtenteils vom Schritt des Aushärtens entkoppelt werden können. Anders ausgedrückt kann die Aushärtetemperatur erhöht werden, ohne dass das Zeitfenster zum Vorwärmen, Vorverdichten und Entlüften entsprechend enger wird. Somit kann das Risiko verringert werden, dass bestimmte Qualitätsanforderungen nicht erfüllt werden. Beispielsweise kann somit verhindert werden, dass sich aufgrund unzureichender Entlüftung Blasen oder Lunker bilden oder es aufgrund einer spontan startenden Aushärtereaktion zu einer unzureichenden Verdichtung kommt. Ferner ermöglicht ein solches Verfahren die Fertigung von Formteilen aus hochgefüllten duromeren Werkstoffen ohne die vorgenannten Einschränkungen in Bezug auf die Rohstoffauswahl. Insbesondere kann dadurch eine Druckhaltezeit beim Aushärten auf 10 s oder weniger verkürzt werden.

Ein zweiter Aspekt der Erfindung betrifft eine Pressvorrichtung zum Herstellen eines Formteils aus einem hochgefüllten duromeren Ausgangsmaterial in einem Verfahren gemäß einer Ausführungsform nach dem ersten Aspekt der Erfindung. Die Pressvorrichtung umfasst ein Vorpresswerkzeug zum Herstellen des Vorpresslings aus dem Ausgangsmaterial. Das Vorpresswerkzeug ist ausgeführt, um das Ausgangsmaterial auf die Vorpresstemperatur zu bringen und mit der Vorpresskraft zu dem Vorpressling zu komprimieren. Weiter umfasst die Pressvorrichtung ein Fertigpresswerkzeug zum Herstellen des Fertigteils aus dem Vorpressling. Das Fertigpresswerkzeug ist ausgeführt, um den Vorpressling auf die Fertigpresstemperatur zu bringen und mit der Fertigpresskraft zu dem Fertigteil zu komprimieren.

Mittels einer solchen Pressvorrichtung können Formteile wie beispielsweise Bipolarplatten für Brennstoffzellen effizient in Großserie hergestellt werden. Gleichzeitig kann mit einer solchen Pressvorrichtung eine sehr hohe Fertigungsqualität erreicht werden.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden.

Gemäß einer Ausführungsform ist die Vorpresstemperatur kleiner als die Onset-Temperatur. Die Vorpresstemperator kann beispielsweise mindestens 5 °C, vorzugsweise mindestens 10 °C oder sogar mindestens 20 °C kleiner als die Onset-Temperatur sein. Dadurch kann das Ausgangsmaterial kompaktiert werden, ohne dass bereits die chemische Vernetzung des Ausgangsmaterials einsetzt. Somit können beispielsweise die Schritte des Vorwärmens, Vorverdichtens und Entlüftens des Ausgangsmaterials unabhängig vom Schritt des Aushärtens des Ausgangsmaterials stattfinden.

Gemäß einer Ausführungsform beträgt die Fertigpresstemperatur mindestens 170 °C, vorzugsweise mindestens 190 °C. Anders ausgedrückt kann die Fertigpresstemperatur deutlich größer als die Onset-Temperatur sein. Dies hat den Effekt, dass die Aushärtung des Fertigteils ohne Qualitätseinbußen deutlich beschleunigt werden kann. Somit können beispielsweise Druckhaltezeiten von weniger als 10 s erreicht werden.

Gemäß einer Ausführungsform beträgt die Vorpresstemperatur höchstens 150 °C, vorzugsweise höchstens 120 °C. Dadurch kann die Aushärtung beim Vorwärmen, Vorverdichten und Entlüften stark verlangsamt oder sogar ganz verhindert werden. Somit können eine gute Vorverdichtung und eine gute Entlüftung gewährleistet werden, ohne dass die Zykluszeiten unverhältnismäßig verlängert werden. Je nach Fertigpresstemperatur können die Zykluszeiten im Vergleich zu herkömmlichen Pressverfahren dabei sogar verkürzt werden.

Gemäß einer Ausführungsform wird der Vorpressling höchstens 10 s, vorzugsweise höchstens 5 s, mit der Fertigpresskraft beaufschlagt. Dadurch können vergleichsweise kurze Zykluszeiten erreicht werden.

Gemäß einer Ausführungsform enthält das Ausgangsmaterial Graphit als Füllstoff. Damit kann das Verfahren beispielsweise zur effizienten (Großserien-)Fertigung von Bipolarplatten o. Ä. eingesetzt werden.

Gemäß einer Ausführungsform enthält das Ausgangsmaterial ein Bindemittel und ein Alkylimidazol als Aushärtekatalysator für das Bindemittel. Das Bindemittel kann beispielsweise ein Epoxid-Bindemittel sein. Dadurch kann die Aushärtung im Vergleich zu Ausgangsmaterialien ohne Alkylimidazol, etwa zu Ausgangsmaterialien, die Arylimidazole wie beispielsweise 2-Phenylimidazol als Bindemittel enthalten, deutlich beschleunigt werden.

Gemäß einer Ausführungsform enthält das Ausgangsmaterial 2-Methylimidazol als Aushärtekatalysator. Dadurch kann die Aushärtung im Vergleich zu Ausgangsmaterialien ohne 2-Methylimidazol, etwa zu Ausgangsmaterialien, die Arylimidazol oder andere Alkylimidazole als Bindemittel enthalten, deutlich beschleunigt werden. Insbesondere kann die Aushärtung dadurch derart beschleunigt werden, dass die Aushärtung bereits vor der Entnahme des Fertigteils aus dem Fertigpresswerkzeug abgeschlossen ist. Somit kann eine thermische Nachbehandlung des Fertigteils entfallen.

Gemäß einer Ausführungsform wird das Ausgangsmaterial durch Rakeln in das Vorpresswerkzeug eingebracht. Im Vergleich zum Einschütten oder zu sonstigen Einbringmethoden kann dadurch eine gleichmäßigere Verteilung des Ausgangsmaterials im Vorpresswerkzeug erreicht werden.

Beispielsweise kann das Vorpresswerkzeug einen Oberstempel und einen Unterstempel umfassen, die jeweils mit kleinen Absetzungen so gestaltet sind, dass die Füllmengen auf verschiedenen Teilflächen, z. B. den Rand-, Dichtungs-, Strömungsverteiler- und Kanalbereichen, dem jeweiligen Materialbedarf auf diesen Teilflächen entsprechen. Somit kann bereits am Vorpressling eine gleichmäßige Vorverdichtung erreicht werden. Somit können unerwünschte Dichte- und/oder Dickenschwankungen des Fertigteils, etwa in Form einer Bipolarplatte, vermieden werden. Weiterhin kann die erforderliche Presskraft beim Herstellen des Fertigteils reduziert werden.

Gemäß einer Ausführungsform beträgt eine Dichte des Vorpresslings mindestens 80 %, vorzugsweise mindestens 90 % einer Dichte des Fertigteils. Durch eine derartige Vorverdichtung des Vorpresslings kann eine entsprechend höhere Fertigpresstemperatur gewählt werden. Anders ausgedrückt kann das Aushärten im Fertigpresswerkzeug bei einer entsprechend höheren Aushärtetemperatur und damit entsprechend schneller erfolgen.

Gemäß einer Ausführungsform wird das Ausgangsmaterial zum Herstellen des Vorpresslings wiederholt komprimiert und entlüftet. Hierzu kann beispielsweise ein oberer Pressstempel des Vorpresswerkzeugs mit gleich bleibender oder ansteigender Kraft auf den Vorpressling aufgesetzt und wieder leicht abgehoben werden.

Gemäß einer Ausführungsform wird die Vorpresskraft beim Herstellen des Vorpresslings variiert. Beispielsweise kann die Vorpresskraft entsprechend einem vordefinierten Vorpresskraft-Weg-Zeit-Profil variiert werden.

Gemäß einer Ausführungsform wird die Fertigpresskraft beim Herstellen des Fertigteils variiert. Beispielsweise kann die Fertigpresskraft entsprechend einem vordefinierten Fertigpresskraft-Weg-Zeit-Profil variiert werden. Vorzugsweise kann die Fertigpresskraft zunächst sehr schnell auf einen Maximalwert erhöht werden, um ein plastisches Fließen der Formmasse bzw. des Vorpresslings zu erreichen. Bereits nach 1 s bis 2 s bzw. sobald die Aushärtereaktion des Bindemittels beginnt, kann die Presskraft dann wieder deutlich reduziert werden.

Gemäß einer Ausführungsform umfasst die Pressvorrichtung eine beheizbare Greifeinrichtung, die ausgeführt ist, um den Vorpressling aus dem Vorpresswerkzeug zu entnehmen und in das Fertigpresswerkzeug einzubringen. Die Greifeinrichtung kann beispielsweise ein Greifroboter, ein Greifarm o. Ä. sein. Mittels der Greifeinrichtung kann der Vorpressling teil- oder vollautomatisiert umgesetzt werden. Ein solches automatisiertes Umsetzen hat den Vorteil, dass zwischen dem Vorpressen und dem Fertigpressen nur relativ wenig Zeit vergeht, sodass die Zykluszeiten insgesamt möglichst kurz gehalten werden können. Mithilfe einer geeigneten Greifeinrichtung kann die Dauer des Umsetzens beispielsweise auf 2 s oder weniger verkürzt werden.

Gemäß einer Ausführungsform weisen das Vorpresswerkzeug und das Fertigpresswerkzeug unterschiedliche Werkzeuggeometrien auf. Das Fertigpresswerkzeug kann beispielsweise eine Werkzeuggeometrie aufweisen, die eine finale Geometrie des Fertigteils abbildet, während das Vorpresswerkzeug eine von dieser finalen Geometrie mehr oder weniger stark abweichende Werkzeuggeometrie aufweisen kann. Die finale Geometrie kann beispielsweise relativ feingliedrige Strukturen wie Kanalstrukturen o. Ä. abbilden. Im Gegensatz dazu kann das Vorpresswerkzeug im Allgemeinen deutlich gröber, beispielsweise eher flächig, ausgeformt sein. Anders ausgedrückt können der Vorpressling und das Fertigteil unterschiedliche Abmessungen haben. Auch können sich der Vorpressling und das Fertigteil in ihrer Dichte voneinander unterscheiden.

Es wird darauf hingewiesen, dass mögliche Merkmale und Vorteile von Ausführungsformen der Erfindung teils mit Bezug auf ein Verfahren zum Herstellen eines Formteils aus einem hochgefüllten duromeren Ausgangsmaterial, teils mit Bezug auf eine Pressvorrichtung, die ein solches Verfahren ausführen kann, beschrieben sind. Ein Fachmann wird erkennen, dass die für einzelne Ausführungsformen beschriebenen Merkmale in analoger und geeigneter Weise auf andere Ausführungsformen übertragen, angepasst und/oder ausgetauscht werden können, um zu weiteren Ausführungsformen der Erfindung und möglicherweise zu Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Figur 1 zeigt eine schematische Darstellung einer Pressvorrichtung gemäß einem Ausführungsbeispiel der Erfindung.
Figur 2 zeigt eine schematische Darstellung eines Vorpresswerkzeugs der Pressvorrichtung aus Figur 1 im geöffneten Zustand.
Figur 3 zeigt eine schematische Darstellung des Vorpresswerkzeugs aus Figur 2 im geschlossenen Zustand.
Figur 4 zeigt eine schematische Darstellung eines Fertigpresswerkzeugs der Pressvorrichtung aus Figur 1 im geöffneten Zustand mit eingelegtem Vorpressling.
Figur 5 zeigt eine schematische Darstellung des Fertigpresswerkzeugs aus Figur 4 im geschlossenen Zustand beim Herstellen eines Fertigteils aus dem Vorpressling.
Figur 6 zeigt eine schematische Darstellung des Fertigpresswerkzeugs aus Figur 4 im geöffneten Zustand mit dem entnahmebereiten Fertigteil.
Figur 7 zeigt ein Ablaufdiagramm eines Pressverfahrens gemäß einem Ausführungsbeispiel der Erfindung.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

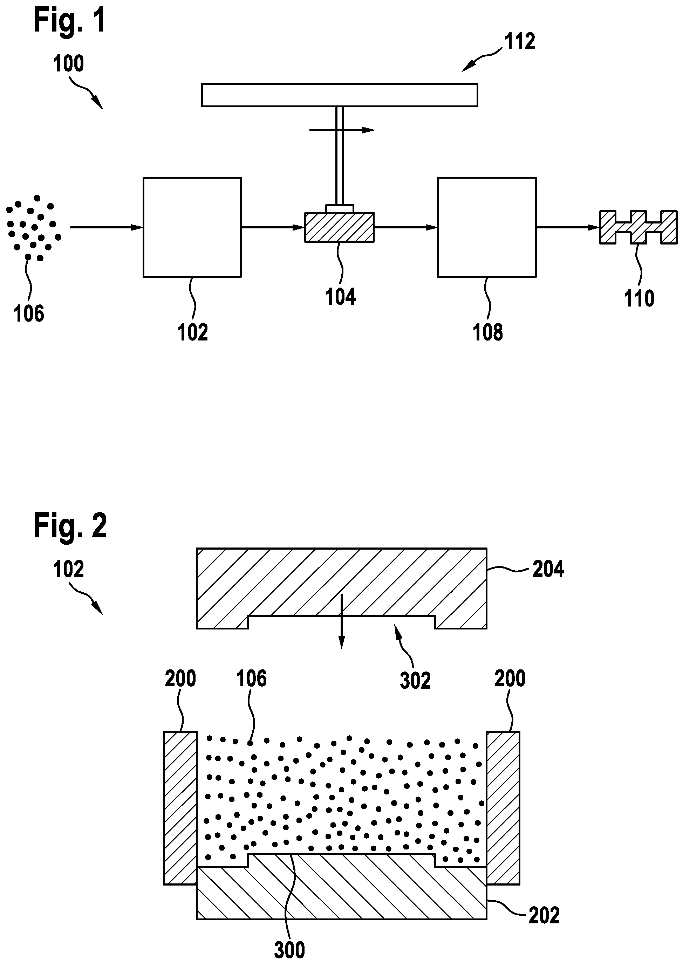

Figur 1 zeigt eine schematische Darstellung einer Pressvorrichtung 100 zum Herstellen eines Formteils aus einem hochgefüllten duromeren Werkstoff. Die Pressvorrichtung 100 umfasst zum einen ein Vorpresswerkzeug 102 zum Herstellen eines Vorpresslings 104 aus einem Ausgangsmaterial 106. Das Vorpresswerkzeug 102 ist ausgeführt, um das Ausgangsmaterial 106 auf eine Vorpresstemperatur zu bringen und mit einer Vorpresskraft zu dem Vorpressling 104 zu komprimieren. Zum anderen umfasst die Pressvorrichtung 100 ein Fertigpresswerkzeug 108 zum Herstellen eines Fertigteils 110 aus dem Vorpressling 104. Das Fertigpresswerkzeug 108 ist ausgeführt, um den Vorpressling 104 auf eine Fertigpresstemperatur zu bringen und mit einer Fertigpresskraft zu dem Fertigteil 110 zu komprimieren. Dabei ist die Vorpresstemperatur kleiner als die Fertigpresstemperatur. Ferner ist die Fertigpresstemperatur mindestens so groß wie eine Onset-Temperatur einer Aushärtereaktion des Ausgangsmaterials 106, genauer einer Aushärtereaktion eines Bindemittels im Ausgangsmaterial 106.

Das Umsetzen des Vorpresslings 104 kann optional mithilfe einer Greifeinrichtung 112 erfolgen, die den Vorpressling 104 aus dem geöffneten Vorpresswerkzeug 102 entnimmt und in das geöffnete Fertigpresswerkzeug 108 einsetzt.

Figur 2 zeigt das Vorpresswerkzeug 102 im geöffneten Zustand. Das Vorpresswerkzeug 102 besteht hier aus einem Formrahmen 200, einem Vorpress-Unterstempel 202 und einem gegenüber dem Vorpress-Unterstempel 202 angeordneten Vorpress-Oberstempel 204. Im geöffneten Zustand ist der Vorpress-Oberstempel 204 vom Formrahmen 200 weggefahren. Der Formrahmen 200 und der Vorpress-Unterstempel 202 begrenzen einen Behälter, in den das Ausgangsmaterial 106 oder Pressmaterial 106 in Form eines Granulats eingefüllt ist.

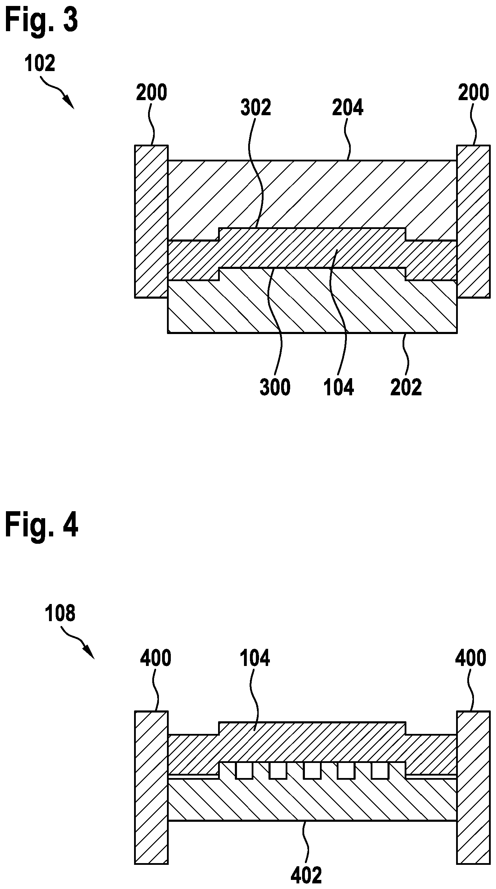

Figur 3 zeigt das Vorpresswerkzeug 102 im geschlossenen Zustand während des Vorpressens, beispielsweise bei 100 °C. Dabei ist der Behälter durch den Vorpress-Oberstempel 204 verschlossen und das Ausgangsmaterial 106 wird zwischen dem Formrahmen 200, dem Vorpress-Unterstempel 202 und dem Vorpress-Oberstempel 204 mit einer geeigneten Vorpresskraft zu dem Vorpressling 104 in Form einer vorgepressten Platte komprimiert. Um das Ausgangsmaterial 106 auf die Vorpresstemperatur zu bringen, können der Vorpress-Unterstempel 202 und der Vorpress-Oberstempel 204 beheizbar sein. Zusätzlich kann der Formrahmen 200 beheizbar sein.

Wie in den Figuren 2 und 3 zu erkennen, können der Vorpress-Unterstempel 202 und der Vorpress-Oberstempel 204 jeweils eine geeignet konturierte Pressfläche aufweisen. Beispielsweise kann der Vorpress-Unterstempel 202 eine Erhebung 300 und der Vorpress-Oberstempel 204 eine Vertiefung 302 aufweisen. Dabei kann eine Außenkontur der Erhebung 300 entsprechend einer Innenkontur der Vertiefung 302 ausgestaltet sein.

Das Fertigpresswerkzeug 108 ist in den Figuren 4 bis 6 genauer gezeigt. Beispielsweise kann der Vorpressling 104 mittels der Greifeinrichtung 112 (siehe Figur 1), die ebenfalls beheizbar sein kann, automatisiert aus dem geöffneten Vorpresswerkzeug 102 entnommen und in das geöffnete Fertigpresswerkzeug 108 eingelegt werden.

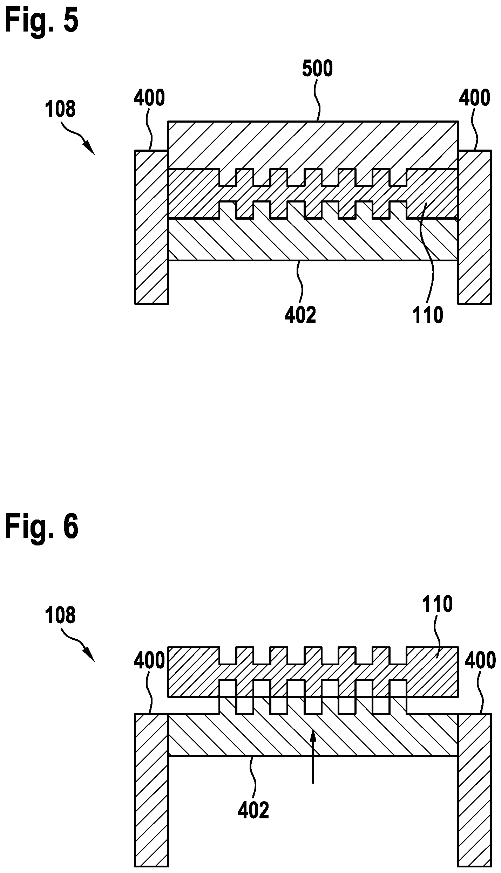

Ähnlich wie das Vorpresswerkzeug 102 umfasst das Fertigpresswerkzeug 108 einen weiteren Formrahmen 400, einen Fertigpress-Unterstempel 402 und einen Fertigpress-Oberstempel 500 (siehe Figur 5). Der Fertigpress-Unterstempel 402 und der Fertigpress-Oberstempel 500 können beispielsweise ebenfalls jeweils eine speziell ausgeformte Pressfläche aufweisen, etwa jeweils eine gerillte oder geriffelte Pressfläche, wie in Figur 5 beispielhaft gezeigt. Die jeweiligen Pressflächen des Fertigpress-Unterstempels 402 und des Fertigpress-Oberstempels 500 können beispielsweise komplementär zueinander ausgeformt sein.

Es ist möglich, dass das Vorpresswerkzeug 102 und das Fertigpresswerkzeug 108 unterschiedliche Werkzeuggeometrien aufweisen. In diesem Beispiel unterscheiden sich das Vorpresswerkzeug 102 und das Fertigpresswerkzeug 108 in der Ausgestaltung ihrer jeweiligen Pressflächen.

Um den Vorpressling 104 auf die Fertigpresstemperatur zu bringen, können der Fertigpress-Unterstempel 402 und der Fertigpress-Oberstempel 500 beheizbar sein. Zusätzlich kann der weitere Formrahmen 400 beheizbar sein.

Figur 4 zeigt das Fertigpresswerkzeug 108 im geöffneten Zustand mit dem eingelegten Vorpressling 104.

Figur 5 zeigt das Fertigpresswerkzeug 108 im geschlossenen Zustand beim Herstellen des Fertigteils 110. Dabei wird der Vorpressling 104 bei einer Fertigpresstemperatur von beispielsweise 180 °C mit einer entsprechenden Fertigpresskraft zu dem Fertigteil 110 komprimiert.

Entsprechend der Kontur der Pressflächen und dem gewählten Ausgangsmaterial 106 kann das Fertigteil 110 beispielsweise eine Bipolarplatte mit beidseitigen Kanalstrukturen und umlaufendem Rand sein.

Schließlich wird das Fertigteil 110 aus dem Fertigpresswerkzeug 108 ausgestoßen, wie in Figur 6 gezeigt.

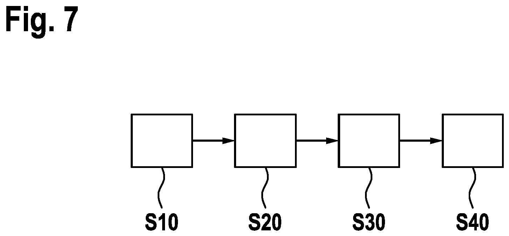

Figur 7 zeigt ein Ablaufdiagramm eines Pressverfahrens, wie es beispielsweise von der in den Figuren 1 bis 6 gezeigten Pressvorrichtung 100 ausgeführt werden kann.

In Schritt S10 wird das Ausgangsmaterial 106 in das Vorpresswerkzeug 102 eingebracht.

In Schritt S20 wird der Vorpressling 104 aus dem Ausgangsmaterial 106 hergestellt. Dabei wird das Ausgangsmaterial 106 mittels des Vorpresswerkzeugs 102 auf die Vorpresstemperatur gebracht, die kleiner als die Fertigpresstemperatur ist, und mit der Vorpresskraft zu dem Vorpressling 104 komprimiert.

In Schritt S30 wird der Vorpressling 104 aus dem Vorpresswerkzeug 102 entnommen und in das Fertigpresswerkzeug 108 eingebracht.

In Schritt S40 wird das Fertigteil 110 aus dem Vorpressling 104 hergestellt. Dabei wird der Vorpressling 104 mittels des Fertigpresswerkzeugs 108 auf die Fertigpresstemperatur gebracht, die mindestens so groß wie die Onset-Temperatur der Aushärtereaktion des Bindemittels im Ausgangsmaterial 106 ist, und mit der Fertigpresskraft zu dem Fertigteil 110 komprimiert.

Kern der erfindungsgemäßen Lösung ist die Aufteilung des Pressprozesses zum Pressen von Formteilen in zwei Teilprozesse in einer verketteten Zweistationenpresse.

Nachfolgend wird die Erfindung anhand der Figuren 1 bis 6 nochmals mit anderen Worten am Beispiel der Herstellung von Platten beschrieben, etwa von graphitischen Bipolarplatten für eine Brennstoffzelle. Die Erfindung kann jedoch auch zur Herstellung nicht plattenförmiger Bauteile verwendet werden.

Gemäß einer Ausführungsform wird zunächst in einer Vorpressstation das Ausgangsmaterial 106 in Form eines pulver- oder granulatförmigen Gemischs, das Füllstoffe, Bindemittelkomponenten und Additive enthalten kann, in das Vorpresswerkzeug 102 eingefüllt. Das Vorpresswerkzeug 102 kann dabei auf eine Vorpresstemperatur aufgeheizt werden, die unter der Onset-Temperatur der Aushärtereaktion des Ausgangsmaterials 106 liegt. Damit können auch mit hoch reaktiven Formmassen, etwa unter Verwendung von 2-Methylimidazol als Aushärtekatalysator eines Epoxid-Bindemittels, eine gute Vorwärmung, eine gute Entlüftung und eine gute Vorverdichtung erzielt werden, ohne dass bereits die Aushärtereaktion startet. Es ist jedoch auch möglich, dass die Vorpresstemperatur in etwa der Onset-Temperatur entspricht oder sogar über der Onset-Temperatur liegt, solange gewährleistet ist, dass die Aushärtung des Ausgangsmaterials relativ langsam erfolgt.

Gemäß einer Ausführungsform wird das Ausgangsmaterial 106 in das offene Vorpresswerkzeug 102 gerakelt. Dadurch kann eine besonders gleichmäßige Materialverteilung im Vorpresswerkzeug gewährleistet werden, was Dicken- und Dichteschwankungen reduziert. Das Vorpresswerkzeug 102 kann beispielweise untere und obere Werkzeugplatten mit Absetzungen umfassen (siehe die Erhebung 300 und die Vertiefung 302 in den Figuren 2 und 3). Durch Zusammenführen der Werkzeugplatten kann das Ausgangsmaterial 106 zu dem Vorpressling 104 geformt, d. h. vorgepresst werden. Diese Absetzungen können so gestaltet sein, dass die flächenbezogen unterschiedlichen Materialbedarfe bereits berücksichtigt werden und dennoch eine gleichmäßige Vorverdichtung erreicht wird.

Möglich ist alternativ auch ein Einschütten des Ausgangsmaterials 106 in das Vorpresswerkzeug 102. Das Ausgangsmaterial 106 kann beispielsweise in verschiedene Bereiche des Vorpresswerkzeugs 102 eingeschüttet werden. Mittels des Vorpresswerkzeugs 102 kann das Ausgangsmaterial 106 beispielsweise auf ungefähr 90 % einer finalen Verdichtung verdichtet werden.

Die Schritte des Vorwärmens, Vorverdichtens und/oder Entlüftens können während des Vorpressens mehrfach wiederholt werden. Anders ausgedrückt kann das Vorpressen in zwei oder mehr als zwei aufeinanderfolgenden Teilschritten mit ansteigenden Vorpressdrücken erfolgen, wobei jeder der Teilschritte die Schritte des Vorwärmens, Vorverdichtens und/oder Entlüftens umfassen kann (siehe oben). Beispielsweise kann der Vorpressdruck bei einer Vorpresstemperatur von 100 °C in drei Stufen von 2 MPa über 10 MPa auf 30 MPa ansteigen.

Die Vorpresstemperatur kann beispielsweise zwischen 70 °C und 140 °C, vorzugsweise zwischen 90 °C und 120 °C liegen.

Mittels des Vorpressens kann sichergestellt werden, dass die plastische Verdichtung des Ausgangsmaterials 106 ohne eine konkurrierende Aushärtereaktion oder allenfalls mit einer nur sehr langsamen Aushärtereaktion stattfindet. Somit kann eine gute Ausbildung der Korngrenzen zwischen den Pulver- bzw. Granulatpartikeln erreicht werden, was eine Voraussetzung für gute mechanische Eigenschaften und eine geringe Gaspermeabilität des Fertigteils 110 in Form der fertiggepressten Platte ist.

Nach dem Vorpressen erfolgt ein Fertigpressen in einer Fertigpressstation mit dem von dem Vorpresswerkzeug 102 getrennten Fertigpresswerkzeug 108. Dazu wird der Vorpressling 104, d. h. die vorgepresste und vorgewärmte Platte, von der Vorpressstation in die Fertigpressstation, genauer in das Fertigpresswerkzeug 108, umgesetzt, etwa mittels der beheizten Greifeinrichtung 112.

Die Greifeinrichtung 112 kann beispielsweise auf eine Temperatur ähnlich der Vorpresstemperatur und/oder der Onset-Temperatur und/oder einer Temperatur des Fertigpresswerkzeugs 108 aufgeheizt sein, d. h. dass eine greifende Oberfläche der Greifeinrichtung 112 auf eine der genannten Temperaturen plus/minus z. B. 20 °C oder plus/minus 10 °C temperiert werden kann. Das Umsetzen sollte relativ zügig erfolgen. Insbesondere sollte das Umsetzen weniger als 2 s dauern.

Das Fertigpresswerkzeug 108 bildet die finale Geometrie des Fertigteils 110 ab. Das Fertigpresswerkzeug 108 und das Vorpresswerkzeug 102 können unterschiedlich ausgeformt sein. Beispielsweise kann das Vorpresswerkzeug 102 nur eine grobe Abbildung der finalen Geometrie des Fertigteils 110 darstellen.

Das Fertigpresswerkzeug 108 ist auf eine Fertigpresstemperatur aufgeheizt, die eine sehr schnelle Aushärtereaktion bewirkt, beispielsweise auf mindestens 170 °C, vorzugsweise auf mindestens 190 °C. Auch eine Fertigpresstemperatur von 200 °C und mehr ist denkbar. Generell sollte die Fertigpresstemperatur deutlich höher als die Onset-Temperatur der Aushärtereaktion des Ausgangsmaterials 106 sein, da sich durch Erhöhung der Aushärtetemperatur die Aushärtezeit entsprechend verkürzt.

Aufgrund der hohen Vorverdichtung des Vorpresslings 104 kann das Fertigpresswerkzeug 108 verhältnismäßig schnell geschlossen werden und es kann entsprechend schnell Druck aufgebaut werden.

Beispielsweise kann bei Verwendung von 2-Methylimidazol als Aushärtekatalysator für das Epoxidharz und einer Fertigpresstemperatur von 170 °C eine Entformung bereits nach Druckhaltezeiten von 8 s bis 10 s stattfinden. Mit einer Fertigpresstemperatur von ca. 190 °C können beispielsweise Druckhaltezeiten von weniger als 5 s erreicht werden.

Ähnlich wie beim Vorpressen können die Parameter des Fertigpressens, wie etwa die Fertigpresstemperatur, die Fertigpresskraft oder eine Druckhaltezeit, während des Fertigpressens variiert werden.

Nach dem Fertigpressen kann das Fertigpresswerkzeug 108 geöffnet werden und das Fertigteil 110 in Form der fertig gepressten Platte kann aus dem Fertigpresswerkzeug 108 entnommen werden. Dies kann wiederum mittels der Greifeinrichtung 112, mittels einer geeigneten anderen Greifeinrichtung oder auch manuell erfolgen.

Anschließend kann eine zusätzliche Temperaturbehandlung erfolgen. Ein solches Nachtempern kann je nach Reaktivität des verwendeten Bindemittelsystems mit dem hier beschriebenen Verfahren deutlich verkürzt werden. Bei sehr hoher Reaktivität, etwa bei Verwendung von 2-Methylimidazol, kann das Nachtempern sogar ganz entfallen, da hier die Aushärtung nach dem Fertigpressen schon weitgehend abgeschlossen ist.

Mit diesem zweistufigen Pressverfahren können beispielsweise die weiter oben mit Bezug auf den vorbeschriebenen Stand der Technik genannten Einschränkungen in Bezug auf die Rohstoffauswahl für die Herstellung von gasdichten Separatorplatten mit hoher Biegefestigkeit und kurzen Zykluszeiten aufgehoben bzw. überwunden werden. Insbesondere können beim Einsatz von Graphit mit einem Rückfederverhalten von weniger als 20 % oder mehr als 70 % Biegefestigkeiten von mehr als 60 MPa erreicht werden. Ferner kann das hier beschriebene Verfahren auch unter Verwendung von 2-Methylimidazol als Aushärtekatalysator ohne nachteilige Auswirkungen auf die Eigenschaften des Fertigteils durchgeführt werden. Die resultierende sehr schnelle Aushärtereaktion führt auch bei sehr kurzen Prozesszeiten zu einem guten Vernetzungsgrad.

Das Potenzial für eine wesentliche Verkürzung der Zykluszeit konnte mit planen und strukturierten Versuchswerkzeugen auf verschiedenen Pressautomaten gezeigt werden. Dabei wurden anstelle eines verketteten Fertigungsprozesses in getrennten Arbeitsschritten Platten aus pressfertigem Granulat vorgepresst und die vorgepressten Platten bei erhöhter Werkzeugtemperatur fertiggepresst. Die gepressten Platten zeigten deutlich bessere mechanische Eigenschaften und eine gleichmäßigere Verdichtung im Vergleich zu konventionellen Prozessen.

### BEZUGSZEICHENLISTE

- 100: Pressvorrichtung
- 102: Vorpresswerkzeug
- 104: Vorpressling
- 106: Ausgangsmaterial
- 108: Fertigpresswerkzeug
- 110: Fertigteil bzw. Formteil
- 112: Greifeinrichtung
- 200: Formrahmen
- 202: Vorpress-Unterstempel
- 204: Vorpress-Oberstempel
- 300: Erhebung
- 302: Vertiefung
- 400: weiterer Formrahmen
- 402: Fertigpress-Unterstempel
- 500: Fertigpress-Oberstempel

## Patentansprüche

1. Verfahren zum Herstellen eines Formteils (110) in Form einer Bipolarplatte für eine Brennstoffzelle aus einem hochgefüllten duromeren Ausgangsmaterial (106), wobei das hochgefüllte duromere Ausgangsmaterial (106) Graphit oder sonstige überwiegend Kohlenstoff enthaltende Stoffverbindungen als Füllstoff in dem Ausgangsmaterial mit einem Füllgrad von mindestens 70 Massenprozent enthält, wobei das Verfahren umfasst:
Einbringen des Ausgangsmaterials (106) in ein Vorpresswerkzeug (102);
Herstellen eines Vorpresslings (104) aus dem Ausgangsmaterial (106), wobei das Ausgangsmaterial (106) mittels des Vorpresswerkzeugs (102) auf eine Vorpresstemperatur gebracht wird und mit einer Vorpresskraft zu dem Vorpressling (104) komprimiert wird;
Entnehmen des Vorpresslings (104) aus dem Vorpresswerkzeug (102) und Einbringen des Vorpresslings (104) in ein Fertigpresswerkzeug (108); und
Herstellen eines Fertigteils (110) aus dem Vorpressling (104), wobei der Vorpressling (104) mittels des Fertigpresswerkzeugs (108) auf eine Fertigpresstemperatur gebracht wird und mit einer Fertigpresskraft zu dem Fertigteil (110) komprimiert wird;
wobei die Vorpresstemperatur kleiner als die Fertigpresstemperatur ist;
wobei die Fertigpresstemperatur mindestens so groß wie eine Onset-Temperatur einer Aushärtereaktion des Ausgangsmaterials (106) ist.

2. Verfahren nach Anspruch 1,
wobei die Vorpresstemperatur kleiner als die Onset-Temperatur ist.

3. Verfahren nach einem der vorhergehenden Ansprüche,
wobei die Fertigpresstemperatur mindestens 170 °C, vorzugsweise mindestens 190 °C, beträgt.

4. Verfahren nach einem der vorhergehenden Ansprüche,
wobei die Vorpresstemperatur höchstens 150 °C, vorzugsweise höchstens 120 °C, beträgt.

5. Verfahren nach einem der vorhergehenden Ansprüche,
wobei der Vorpressling (104) höchstens 10 s, vorzugsweise höchstens 5 s, mit der Fertigpresskraft beaufschlagt wird.

6. Verfahren nach einem der vorhergehenden Ansprüche,
wobei das Ausgangsmaterial (106) Graphit als Füllstoff enthält.

7. Verfahren nach einem der vorhergehenden Ansprüche,
wobei das Ausgangsmaterial (106) ein Bindemittel und ein Alkylimidazol als Aushärtekatalysator für das Bindemittel enthält.

8. Verfahren nach einem der vorhergehenden Ansprüche,
wobei das Ausgangsmaterial (106) durch Rakeln in das Vorpresswerkzeug (102) eingebracht wird.

9. Verfahren nach einem der vorhergehenden Ansprüche,
wobei eine Dichte des Vorpresslings (104) mindestens 80 %, vorzugsweise mindestens 90 % einer Dichte des Fertigteils (110) beträgt.

10. Verfahren nach einem der vorhergehenden Ansprüche,
wobei das Ausgangsmaterial (106) zum Herstellen des Vorpresslings (104) wiederholt komprimiert und entlüftet wird.

11. Verfahren nach einem der vorhergehenden Ansprüche,
wobei die Vorpresskraft beim Herstellen des Vorpresslings (104) variiert wird.

12. Verfahren nach einem der vorhergehenden Ansprüche,
wobei die Fertigpresskraft beim Herstellen des Fertigteils (110) variiert wird.

13. Pressvorrichtung (100) zum Herstellen eines Formteils (110) in Form einer Bipolarplatte für eine Brennstoffzelle aus einem hochgefüllten duromeren Ausgangsmaterial (106) in einem Verfahren nach einem der vorhergehenden Ansprüche, wobei die Pressvorrichtung (100) umfasst:
ein Vorpresswerkzeug (102) zum Herstellen des Vorpresslings (104) aus dem Ausgangsmaterial (106), wobei das Vorpresswerkzeug (102) ausgeführt ist, um das Ausgangsmaterial (106) auf die Vorpresstemperatur zu bringen und mit der Vorpresskraft zu dem Vorpressling (104) zu komprimieren; und
ein Fertigpresswerkzeug (108) zum Herstellen des Fertigteils (110) aus dem Vorpressling (104), wobei das Fertigpresswerkzeug (108) ausgeführt ist, um den Vorpressling (104) auf die Fertigpresstemperatur zu bringen und mit der Fertigpresskraft zu dem Fertigteil (110) zu komprimieren, wobei das Fertigpresswerkzeug (108) eine Werkzeuggeometrie aufweist, welche eine finale Geometrie des Fertigteils mit Kanalstrukturen abbildet.

14. Pressvorrichtung (100) nach Anspruch 13, ferner umfassend:
eine beheizbare Greifeinrichtung (112), die ausgeführt ist, um den Vorpressling (104) aus dem Vorpresswerkzeug (102) zu entnehmen und in das Fertigpresswerkzeug (108) einzubringen.

15. Pressvorrichtung (100) nach Anspruch 13 oder 14,
wobei das Vorpresswerkzeug (102) und das Fertigpresswerkzeug (108) unterschiedliche Werkzeuggeometrien aufweisen.

## Claims

1. Process for producing a molded part (110) in the form of a bipolar plate for a fuel cell from a highly filled thermosetting starting material (106), wherein the highly filled thermosetting starting material (106) contains graphite or other predominantly carbon-containing compounds as filler in the starting material with a degree of filling of at least 70 mass percent, the process comprising:
placing the starting material (106) into a prepressing tool (102);
producing a preform (104) from the starting material (106), wherein the starting material (106) is brought to a prepressing temperature by means of the prepressing tool (102) and is compressed with a prepressing force to form the preform (104);
removing the preform (104) from the prepressing tool (102) and placing the preform (104) into a finish pressing tool (108); and
producing a finished part (110) from the preform (104), wherein the preform (104) is brought to a finish pressing temperature by means of the finish pressing tool (108) and is compressed with a finish pressing force to form the finished part (110);
wherein the prepressing temperature is lower than the finish pressing temperature;
wherein the finish pressing temperature is at least as high as an onset temperature of a curing reaction of the starting material (106).

2. The process according to claim 1,
wherein the prepressing temperature is lower than the onset temperature.

3. The process according to any one of the preceding claims,
wherein the finish pressing temperature is at least 170 °C, preferably at least 190 °C.

4. The process according to any one of the preceding claims,
wherein the prepressing temperature is at most 150 °C, preferably at most 120 °C.

5. The process according to any one of the preceding claims,
wherein the preform (104) is subjected to the finish pressing force for at most 10 s, preferably at most 5 s.

6. The process according to any one of the preceding claims,
wherein the starting material (106) contains graphite as filler.

7. The process according to any one of the preceding claims,
wherein the starting material (106) comprises a binder and an alkylimidazole as a curing catalyst for the binder.

8. The process according to any one of the preceding claims,
wherein the starting material (106) is introduced into the prepressing tool (102) by doctoring.

9. The process according to any one of the preceding claims,
wherein a density of the preform (104) is at least 80%, preferably at least 90%, of a density of the finished part (110).

10. The process according to any one of the preceding claims,
wherein the starting material (106) is repeatedly compressed and deaerated to produce the preform (104).

11. The process according to any one of the preceding claims,
wherein the prepressing force is varied during production of the preform (104).

12. The process according to any one of the preceding claims,
wherein the finish pressing force is varied during production of the finished part (110).

13. A pressing device (100) for producing a molded part (110) in the form of a bipolar plate for a fuel cell from a highly filled thermosetting starting material (106) in a process according to any one of the preceding claims, wherein the pressing device (100) comprises:
a prepressing tool (102) for producing the preform (104) from the starting material (106), the prepressing tool (102) being adapted to bring the starting material (106) to the prepressing temperature and compress it with the prepressing force to form the preform (104); and
a finish pressing tool (108) for producing the finished part (110) from the preform (104), the finish pressing tool (108) being adapted to bring the preform (104) to the finish pressing temperature and compress it with the finish pressing force to form the finished part (110), the finish pressing tool (108) having a tool geometry that replicates a final geometry of the finished part with channel structures.

14. The pressing device (100) according to claim 13, further comprising:
a heatable gripping device (112) configured to remove the preform (104) from the prepressing tool (102) and insert it into the finish pressing tool (108).

15. Pressing device (100) according to claim 13 or 14,
wherein the prepressing tool (102) and the finish pressing tool (108) have different tool geometries.

## Revendications

1. Procédé de fabrication d'une pièce moulée (110) sous la forme d'une plaque bipolaire pour une pile à combustible à partir d'un matériau de départ duromère hautement rempli (106), le matériau de départ duromère hautement rempli (106) contenant du graphite ou d'autres composés de substance contenant principalement du carbone en tant que charge dans le matériau de départ avec un degré de remplissage d'au moins 70 pour cent en masse, le procédé comprenant :
l'introduction du matériau de départ (106) dans un outil de précompression (102) ;
la fabrication d'une ébauche de précompression (104) à partir du matériau de départ (106), le matériau de départ (106) étant amené au moyen de l'outil de précompression (102) à une température de précompression et étant comprimé avec une force de précompression pour former l'ébauche de précompression (104) ;
le retrait de l'ébauche de précompression (104) de l'outil de précompression (102) et l'introduction de l'ébauche de précompression (104) dans un outil de compression finale (108) ; et
la fabrication d'une pièce finie (110) à partir de l'ébauche de précompression (104), l'ébauche de précompression (104) étant amenée au moyen de l'outil de compression finale (108) à une température de compression finale et étant comprimée avec une force de compression finale pour former la pièce finie (110) ;
la température de précompression étant inférieure à la température de compression finale ;
la température de compression finale étant au moins aussi grande qu'une température de démarrage d'une réaction de durcissement du matériau de départ (106).

2. Procédé selon la revendication 1,
la température de précompression étant inférieure à la température de démarrage.

3. Procédé selon l'une quelconque des revendications précédentes,
la température de compression finale étant d'au moins 170 °C, de préférence d'au moins 190 °C.

4. Procédé selon l'une quelconque des revendications précédentes,
la température de précompression étant d'au plus 150 °C, de préférence d'au plus 120 °C.

5. Procédé selon l'une quelconque des revendications précédentes,
l'ébauche de précompression (104) étant soumise à la force de compression finale pendant au plus 10 s, de préférence au plus 5 s.

6. Procédé selon l'une quelconque des revendications précédentes,
le matériau de départ (106) contenant du graphite en tant que charge.

7. Procédé selon l'une quelconque des revendications précédentes,
le matériau de départ (106) contenant un liant et un alkylimidazole en tant que catalyseur de durcissement pour le liant.

8. Procédé selon l'une quelconque des revendications précédentes,
le matériau de départ (106) étant introduit par raclage dans l'outil de précompression (102).

9. Procédé selon l'une quelconque des revendications précédentes,
une densité de l'ébauche de précompression (104) étant d'au moins 80 %, de préférence d'au moins 90 % d'une densité de la pièce finie (110).

10. Procédé selon l'une quelconque des revendications précédentes,
le matériau de départ (106) étant comprimé et aéré de manière répétée pour la fabrication de l'ébauche de précompression (104).

11. Procédé selon l'une quelconque des revendications précédentes,
la force de précompression étant modifiée lors de la fabrication de l'ébauche de précompression (104).

12. Procédé selon l'une quelconque des revendications précédentes,
la force de compression finale étant modifiée lors de la fabrication de la pièce finie (110).

13. Dispositif de compression (100) pour la fabrication d'une pièce moulée (110) sous la forme d'une plaque bipolaire pour une pile à combustible à partir d'un matériau de départ duromère hautement rempli (106) dans un procédé selon l'une quelconque des revendications précédentes, le dispositif de compression (100) comprenant :
un outil de précompression (102) pour la fabrication de l'ébauche de précompression (104) à partir du matériau de départ (106), l'outil de précompression (102) étant réalisé pour amener le matériau de départ (106) à la température de précompression et pour le comprimer avec la force de précompression pour former l'ébauche de précompression (104) ; et
un outil de compression finale (108) pour la fabrication de la pièce finie (110) à partir de l'ébauche de précompression (104), l'outil de compression finale (108) étant réalisé pour amener l'ébauche de précompression (104) à la température de compression finale et pour le comprimer avec la force de compression finale pour former la pièce finie (110), l'outil de compression finale (108) présentant une géométrie d'outil qui reproduit une géométrie finale de la pièce finie avec des structures de canaux.

14. Dispositif de compression (100) selon la revendication 13, comprenant en outre :
un dispositif de préhension chauffable (112) qui est réalisé pour retirer l'ébauche de précompression (104) de l'outil de précompression (102) et pour l'introduire dans l'outil de compression finale (108).

15. Dispositif de compression (100) selon la revendication 13 ou 14,
l'outil de précompression (102) et l'outil de compression finale (108) présentant des géométries d'outil différentes.
